# EUROPEAN PATENT SPECIFICATION

(11) **EP 4 199 740 B1**
(45) Date of publication and mention of the grant of the patent: **03.07.2024**
(21) Application number: 21759179.1
(22) Date of filing: 19.08.2021
(51) Int. Cl.: A23K 20/158, A23K 50/10, A23K 50/20

(54) **METHODS FOR IMPROVING COLOSTRUM IN RUMINANTS AND PSEUDO-RUMINANTS**
VERFAHREN ZUR VERBESSERUNG DES KOLOSTRUMS IN WIEDERKÄUERN UND PSEUDO-WIEDERKÄUERN
PROCÉDÉS POUR AMÉLIORER LE COLOSTRUM CHEZ LES RUMINANTS ET LES PSEUDO-RUMINANTS

(30) Priority: 19.08.2020 NL 2026298
(43) Date of publication of application: 28.06.2023
(73) Proprietor: Palital Feed Additives B.V., 5334 LH Velddriel (NL)
(72) Inventor: BOOMSMA, Bart Jan, 5334 LH Velddriel (NL); VAN DEN BIGHELAAR, Hendrikus Gerardus Martinus Maria, 5334 LH Velddriel (NL)
(74) Representative: V.O.
(86) International application number: PCT/NL2021/050516
(87) International publication number: WO 2022/039599

(56) References cited:
- WO-A1-2020/127263
- US-A1- 2007 036 837
- KOWALSKI Z.M. ET AL: "Effect of microencapsulated sodium butyrate in the close-up diet on performance of dairy cows in the early lactation period", JOURNAL OF DAIRY SCIENCE, vol. 98, no. 5, 1 May 2015 (2015-05-01), pages 3284-3291, XP055794890, US ISSN: 0022-0302, DOI: 10.3168/jds.2014-8688
- DATABASE BIOSIS [Online] BIOSCIENCES INFORMATION SERVICE, PHILADELPHIA, PA, US; September 2018 (2018-09), REN QING-CHANG ET AL: "Effects of tributyrin supplementation on ruminal microbial protein yield, fermentation characteristics and nutrients degradability in adult Small Tail ewes", XP002802686, Database accession no. PREV201800783126 & ANIMAL SCIENCE JOURNAL, vol. 89, no. 9, September 2018 (2018-09), pages 1271-1279, ISSN: 1344-3941(print), DOI: 10.1111/ASJ.13033
- HILTZ R L ET AL: "Effect of butyrate on passive transfer of immunity in dairy calves", JOURNAL OF DAIRY SCIENCE, vol. 102, no. 5, 2015, pages 4190-4197, XP085657267, ISSN: 0022-0302, DOI: 10.3168/JDS.2018-15555
- REN QING-CHANG ET AL: "Effects of tributyrin supplementation on ruminal microbial protein yield, fermentation characteristics and nutrients degradability in adult Small Tail ewes", BIOSIS, BIOSCIENCES INFORMATION SERVICE, PHILADELPHIA, PA, US, 1 September 2018 (2018-09-01), XP002802686,

## Description

### Field of the invention

The present invention relates to the field of animal nutrition. More particularly, to a method for improving colostrum in a ruminant or pseudo-ruminant after parturition.

### Background of the invention

The quality of colostrum is an important factor in determining health and survival of newborn mammals such as ruminants and pseudo-ruminants. During pregnancy of ruminants and pseudo-ruminants, the maternal and fetal blood is separated by the placenta, thereby preventing transmission of protective immunoglobulins. As a consequence, young are born agammaglobulinemic (i.e. they have no circulating immunoglobulins) with no protective immunity against infectious diseases and completely rely on colostrum to absorb maternal immunoglobulins. A good quality of colostrum is, therefore, essential and should contain sufficient nutrients, bioactive compounds and maternal immunoglobulins to ensure optimal growth and protection against infectious diseases to increase the chances for survival. Additional long-term benefits associated with successful passive transfer of immunity include decreased mortality in the postweaning period, improved rate of liveweight gain, decreased age at first calving, improved first and second lactation milk production, and decreased tendency for culling during the first lactation.

A successful transfer of passive immunity from dam to calf is dependent on the dam's ability to produce sufficient immunoglobulins in the colostrum, and the ability of the calf to absorb the immunoglobulins into its circulation. Since about 32-42% of calves in the dairy industry is estimated to experience insufficient passive immunity, there is an enormous need for managing and improving the passive transfer from dam to calf by increasing immunoglobulins concentration in colostrum.

Some studies have suggested a diet supplemented with sodium butyrate in pigs can improve production of colostrum and increase immunoglobulin concentrations (Jang et al. 2017. Livestock Science 195:13-20; Chen et al. 2019. Anim Sci 97(10):4256-4267). In contrast to what has been observed in pigs, supplementation with butyrate did not show improvement in colostrum in cows or other ruminants. A recent study by Hiltz et al., 2019 (J. Dairy Sci. 102:4190-4197) did not find an effect of rumen-protected sodium butyrate supplementation during the dry period on IgG concentration in serum or colostrum of cows. Butyrate released into the small intestine is absorbed into the peripheral blood supply and passed through the liver, and more than 80% of butyrate is metabolized in 1 pass through the liver of dams. The authors concluded that there may be a limited potential for dietary supplementation of butyrate to affect mammary transport of IgG into colostrum. They further studied the effect of feeding calves with colostrum replacer supplemented with sodium butyrate and found that butyrate supplementation in colostrum lead to a decrease of serum IgG concentrations in the calves. Consequently it was concluded that butyrate inclusion in colostrum negatively affects IgG absorption in newborn calves.

Butyrate has been widely used to stimulate the rumen wall redevelopment during the transition phase of ruminants. For example, Kowalski et al., 2015. J. Dairy Sci. 98 :3284-3291 showed that sodium butyrate supplementation in dairy cows has potential to enhance rumen papillae growth and rumen adaptation to the postpartum diet. However, lactation performance was not affected.

Current classical strategies to improve colostrum quality in dams include selection of specific breeds and selection of dam's with an older age, however, these strategies are time consuming and costly. Others have reported the importance of a good nutrition and/or the use of supplements in the prepartum period to improve colostrum but results are highly variable and are dependent on the types and quality of the feed and/or supplements.

Thus, it still remains a challenge in the farming industry to obtain a good quality of colostrum. Multiple studies have shown significant differences in overall volume of colostrum as well as concentration of nutrients and immunoglobins. Specifically IgG is crucial for subsequent passive immunity, as it the dominant immunoglobulin in ruminant being 65-90% of the immunoglobulins, and a minimum amount of IgG needs to be transferred to the offspring's in order to provide sufficient protection. Colostrum that contains inadequate concentrations of IgG increases the risk of failure of passive immunity transfer. Further, low concentrations of IgG would require offspring to consume a much higher volume of colostrum in a limited time window while the gut still has the ability to absorb the IgG. Immunoglobin transfer across the gut is optimum during the first 4 hours but then declines rapidly after 12 hours. Low IgG concentrations in colostrum is common in the dairy industry and increases the risk that the offspring might not consume sufficient IgG within this window of time.

In practice, it is common that when colostrum quality from a dam is poor that higher quality colostrum from another dam will be given to the offspring instead. Further, for dams that produce twin offspring there is a higher colostrum volume required compared to that of a dam producing a single offspring. In dairy cow breeds the frequency of twin offspring is approx. 5%, and for beef cow breeds around 1%. Colostrum preparations are commercially sold, but are normally limited in terms of their composition relative to unprocessed, naturally produced colostrum. As such, the yield of good quality colostrum from the dam is also a very important aspect in terms of improving colostrum.

Hence, there remains a need in the art to improve colostrum in ruminants and pseudo-ruminants.

### Summary of the invention

It is the object of the invention to improve the quality of colostrum in a ruminant or pseudo-ruminant and overcome one or more of the challenges detailed above. The invention therefore provides a method for improving colostrum in a ruminant or pseudo-ruminant comprising providing said ruminant or pseudo-ruminant with a composition comprising butyrate during at least part of the prepartum period.

Preferably at least 25% of said butyrate is present in said composition in the form of magnesium butyrate and/or one or more esters of butyric acid.

In one embodiment, essentially all butyrate present in said composition is in the form of magnesium butyrate and/or one or more esters of butyric acid.

In one embodiment, the ester of butyric acid is a butyrate glyceride, selected from the group consisting of monobutyrin, dibutyrin, tributyrin and combinations thereof.

In one embodiment, said ruminant is a cow and said composition is provided daily for at least 1 week prepartum.

In one embodiment, said cow is a dairy cow and said composition is provided daily between 1 and 7 weeks prepartum.

In one embodiment, said ruminant is a goat and said composition is provided daily for at least 1 week prepartum.

In one embodiment, said goat is a dairy goat and said composition is provided daily between 1 and 7 weeks prepartum.

In a preferred embodiment, the improvement of colostrum is an improvement in colostrum composition and/or yield.

The improvement of colostrum comprises:
- an increase in colostrum yield, and/or
- an increase in immunoglobulin concentration in colostrum.

The colostrum yield and/or total immunoglobulin concentration are increased by at least 5%.

In one embodiment, the total IgG concentration is increased.

In one embodiment, the composition is formulated for release of butyrate in the rumen of said ruminant or pseudo-ruminant. E.g. the composition is formulated for release of said butyrate in the rumen of said ruminant or pseudo-ruminant.

In one embodiment, the butyrate is coated in order to provide gradual release in the rumen.

In one embodiment, the composition is matrix-coated in a fat-based substance.

In one embodiment, the composition comprises a mixture of butyrate and one or more fat-based substance in a ratio of 20-95 wt% of butyrate to 5-80 wt% of fat-based substance.

In one embodiment, the fat-based substance is selected from the group consisting of fatty acids, fatty alcohols, glyceride esters of fatty acids, alkyl esters of fatty acids, hydroxyl fatty acid analogues or any organic compounds that are solid near ambient temperature and/or combinations thereof, preferably the fatty substance is a vegetable, plant or animal fat, such as vegetable or plant oil like coconut oil, palm oil, soybean oil, rapeseed oil, sunflower oil, corn oil, safflower oil, sesame oil, linseed oil, grape seed oil or olive oil, more preferably the vegetable or plant oil is hydrogenated vegetable or plant oil such as hydrogenated palm oil.

In one embodiment, the composition is provided to the ruminant or pseudo-ruminant at a dose of at least 20 grams of butyric acid per animal per day, more preferably at least 50 grams of butyric acid per animal per day, more preferably at least 90 grams of butyric acid per animal per day, in particular if the ruminant is a cow.

In one embodiment, the composition is provided to the ruminant or pseudo-ruminant at a dose of at least 5 grams of butyric acid per animal per day, more preferably at least 15 grams of butyric acid per animal per day, in particular if the ruminant is a goat.

### Detailed description

A commonly used strategy in the dairy industry to facilitate rumen development and also adapt the rumen microbiota is to provide concentrate feeding during 2-3 weeks prior to parturition (also known as the close-up period). Such a feeding strategy stimulates rumen papillae growth, and thus increases rumen wall surface area for nutrients absorption postpartum. However, such a close-up diet may lead to overconsumption, which in turn may negatively affect performance of cows after calving and increase the risk of certain diseases due to the inappropriate supply of excess energy. Further, commonly practiced feeding systems during the close-up period may not sustain adequate rumen epithelium preparation for efficient nutrients absorption after parturition.

According to the limited literature available on the usage of butyrate in the ruminant diets of mature ruminants, butyrate has a positive effect on feed intake, growth of the rumen papillae in certain parts of the rumen and the blood circulation of the rumen wall. In addition, certain intracellular genes may be activated that positively influence energy metabolism which could be beneficial, in particular for dry cows. Supplementation with butyrate avoids problems associated with concentrate feeding prior to parturition as mentioned above.

The inventors have now unexpectedly found that supplementation of dams with a composition comprising butyrate results in improved colostrum. Classically, butyrate comes in the form of a calcium or sodium salt but too much of either sodium or calcium would greatly increase the risk of metabolic problems if fed during the last few weeks prior to parturition. In dairy cows calcium intake during the dry period normally already exceeds the total recommended dietary requirement due to the high amount in commonly used forages that are fed. Similarly, depending on what forage is fed, the maximum recommended amount of sodium intake is often exceeded with common diets, and sodium also plays an important role in determining Dietary Cation-Anion Difference (DCAD).

The inventors therefore use other forms of butyrate to avoid excess of calcium or sodium, such as magnesium butyrate or esters of butyric acid. In contrast to sodium and calcium, the daily requirement for magnesium during the close-up period is often not met. Extra magnesium in form of magnesium butyrate provides additional benefits as it becomes available in the rumen without the need for digestive enzymes, and provides extra magnesium to dams which helps to prevent milk fever and hypomagnesaemia due to the high bioavailability of the magnesium (particularly relative to magnesium oxide).

The inventors also unexpectedly found that replacing at least some of the butyrate salts with magnesium butyrate also results in an improved colostrum in ruminants. As shown in the examples, different trials were performed on dairy cows and goats to evaluate the effects of feeding a composition comprising coated magnesium butyrate daily starting 3 weeks prior to calving. It was found that this feeding resulted in an increase in the volume of colostrum and a higher IgG concentration. Such increase in colostrum yield and IgG concentration is highly desirable in the ruminant or pseudo-ruminant livestock industry as it provides additional benefit to the offspring by increasing the chance for a successful passive immunity transfer.

Accordingly, the invention provides a method for improving colostrum in a ruminant or pseudo-ruminant, preferably ruminant, comprising providing said ruminant or pseudo-ruminant, preferably ruminant, with a composition comprising butyrate during at least part of the prepartum period of said ruminant or pseudo-ruminant, preferably ruminant.

The composition is formulated for release of butyrate in the rumen of said ruminant or pseudo-ruminant.

The term "colostrum" refers to the first milk that is produced in the first days after parturition. The composition of colostrum changes with each hour after parturition and gradually changes to milk, but the milk collected from ruminants or pseudo-ruminants within the first 2 days after parturition is commonly referred to as colostrum (see e.g. Puppel et al. Animals 2019, 9(12), 1070; doi:10.3390/ani9121070). Hence, the term "colostrum" as used herein preferably refers to milk collected from the ruminant or pseudo-ruminant within 2 days after parturition and preferably colostrum collected from the ruminant or pseudo-ruminant within 2 days after parturition is improved. Time is considered a critical factor as colostrum composition and also its biological and nurturing value decreases with each hour. According to the method of the invention, colostrum collected from the ruminant or pseudo-ruminant within the first 6 hours after parturition is improved. In a further preferred embodiment, colostrum collected from the ruminant or pseudo-ruminant within the first 2 hours after parturition is improved. Compared to milk, colostrum contains increased amounts of total solids, proteins, fat, vitamins and minerals. Particularly, immunoglobulins are the most abundant proteins in colostrum (Puppel et al., 2019 Animals 9(12):1070; doi:10.3390/ani9121070).

"Improving colostrum" as used herein, comprises improving colostrum composition and/or yield. It comprises an increase in colostrum yield and/or an increase in immunoglobulin concentration in colostrum of a ruminant or pseudo-ruminant provided with butyrate in accordance with the invention as compared to colostrum of non-butyrate supplemented control groups. The increase in colostrum yield and/or immunoglobulin concentration in colostrum are as determined in colostrum produced by the ruminant or pseudo-ruminant within 6 hours after parturition, preferably within 2 hours after parturition. Preferably, improving colostrum comprises both an increase in colostrum yield and an increase in immunoglobulin concentration in colostrum of a ruminant or pseudo-ruminant provided with butyrate in accordance with the invention as compared to colostrum of non-butyrate supplemented control groups.

The term "an increase in colostrum yield" as used herein refers to an increase in the volume of colostrum that is obtained from a ruminant or pseudo-ruminant provided with butyrate in accordance with the invention as compared to non-butyrate-supplemented control groups. According to the invention, the volume of colostrum collected within 6 hours, preferably within 2 hours after parturition. Increase in colostrum yield can be measured by any method known in the art. For example by directly measuring the volume i.e. in liters, and/or by measuring the weight i.e. in kilograms. The colostrum yield is increased by at least 5% by weight or volume as compared to non-butyrate supplemented control groups, preferably by at least 10%, more preferably by at least 15%, more preferably by at least 20%, most preferably by at least 22%.

The term "increase in immunoglobulin concentration" as used herein refers to an increase in immunoglobulin concentration in colostrum that is obtained from a ruminant or pseudo-ruminant provided with butyrate in accordance with the invention as compared to non-butyrate-supplemented control groups. Preferably the increase comprises an increase in the concentration of total IgG, but other classes such as IgA, IgM and/or IgE may also be increased. The term "total IgG" as used herein refers to the combination of all subclasses of IgG present in the colostrum. IgG concentration can be measured by any method known in the art, for example by using a Brix refractometer to estimate the levels of IgG in Brix values or grams per liter, as described in the Examples herein, or by using other molecular and/or immunological assays known in the art. The immunoglobulin concentration is increased by at least 5% compared to non-supplemented control groups, preferably by at least 10%, more preferably by at least 20%, more preferably by at least 25%, more preferably by at least 30%, most preferably by at least 40%. More preferably, the total IgG concentration in colostrum is increased by at least 10% compared to non-supplemented control groups, more preferably by at least 20%, more preferably by at least 30%, most preferably by at least 40%. The term "total IgG" as used herein refers to all subclasses of IgG present in the colostrum.

Survival and wellbeing of for instance a newborn calf is strongly dependent on the transfer of immunoglobulin IgG from the colostrum consumed immediately after birth and, therefore, the concentration of the immunoglobulin IgG in colostrum is generally used for determining colostrum quality. The amount of IgG in colostrum normally accounts for approximately 65% to 90% of the total immunoglobulin in colostrum. The amount of IgA and IgM in colostrum is about 7-10% and 8-10% of the total immunoglobulin in colostrum, respectively. In particular IgG is transferred from the dam's blood stream across the mammary barrier into colostrum by a specific transport mechanism. The receptors on the mammary alveolar epithelial cells capture IgG from the extracellular fluid, and the molecule undergoes endocytosis, transport, and eventually release into the luminal secretions. Smaller amounts of IgA and IgM are largely derived from local synthesis by plasmacytes in the mammary gland. Although not well understood, colostral transfer of IgE also occurs and may be important in providing early protection against intestinal parasites.

After absorption into, e.g., the calf's circulation, the duration of passive immunity from maternal immunoglobulins is highly variable and depends to a great extent on the total mass of immunoglobulins consumed and absorbed within the first 24 hours of life. The recommended amount of colostrum at the first feed is between 10% to 12% of the calves body weight. A successful passive immunity transfer requires calves to consume a sufficient mass of IgG in colostrum, and failure of transfer of passive immunity in newborn calves may be avoided if calves consume at least 3 liters of colostrum with IgG concentration higher than 40 grams per liter within 6 hours after birth. This is often challenging to achieve as colostral immunoglobulin levels are highly variable among dams and the total volume of colostrum consumed in such a short time is variable among calves. Therefore, increasing the amount of IgG in colostrum by for instance 5% would already be highly beneficial to ensure that sufficient IgG is consumed shortly after birth.

In addition to increased colostrum yield and/or immunoglobulin concentration, additional factors may be increased in colostrum by providing a composition comprising butyrate, preferably wherein at least 25% of said butyrate is present in said composition in the form of magnesium butyrate and/or one or more esters of butyric acid, more preferably in the form of magnesium butyrate and/or one or more esters of butyric acid, according to the invention. Examples of such factors include but are not limited to total solids and fats, total proteins including casein and albumin, lactose and insulin.

The composition comprising butyrate, preferably wherein at least 25% of said butyrate is present in said composition in the form of magnesium butyrate and/or one or more esters of butyric acid, more preferably in the form of magnesium butyrate may be provided daily during at least part of the prepartum period. The total amount of butyrate per day provided to the ruminant or pseudo-ruminant, preferably ruminant, may be any amount that are effective in improving colostrum, which amount may depend on the exact species of ruminant or pseudo-ruminant and can be readily assessed by a person skilled in the art. In a preferred embodiment, the composition is provided to the ruminant or pseudo-ruminant, preferably ruminant, more preferably cattle or goats, more preferably a dairy cow or goat, at a dose of at least 5 grams of butyrate per day, based on the weight of butyric acid. Preferably the composition provided to the ruminant or pseudo-ruminant, preferably ruminant, at a dose of at least 10 gramps of butyric acid per day, more preferably at least 12 grams of butyric acid per day, more preferably at least 14 grams of butyric acid per day, more preferably, more preferably at least 15 grams of butyric acid per day, more preferably at least 25 grams of butyric acid per day, more preferably at a dose of at least 50 grams of butyric acid per day, more preferably at a dose of at least 80 grams of butyric acid per day, more preferably at a dose of at least 85 grams of butyric acid per day, more preferably at least 90 grams of butyric acid per day. This amount is the amount of butyric acid (CH₃CH₂CH₂CO₂H) as such, not including the weight of the cation such as magnesium, calcium or sodium, or the weight of e.g. the glyceride backbone of monobutyrin, dibutyrin or tributyrin. For example, for cows a suitable dose of magnesium butyrate is 105 grams, corresponding to approximately 93 grams of butyric acid. For cows, in particular dairy cows, the preferable dose of butyric acid is at least 20 grams per animal per day, more preferably at least 50 grams per animal per day, more preferably at least 80 grams per animal per day more preferably at least 85 grams per animal per day, more preferably at least 90 grams per animal per day. Such dose has proved sufficient in Holstein Friesian cows to improve colostrum as demonstrated in the examples. As another example, for goats a suitable dose of magnesium butyrate is 17.5 grams, corresponding to approximately 15.5 grams of butyric acid. For goats, in particular dairy goats, the preferable dose of butyric acid is at least 5 grams per animal per day, more preferably at least 10 grams per animal per day, more preferably at least 12 grams per animal per day, more preferably at least 14 grams per animal per day, more preferably at least 15 grams per animal per day. Such dose has proved sufficient in dairy goats to improve colostrum as demonstrated in the examples. For other species of ruminants or pseudo-ruminants, suitable doses can be calculated based on the relative average weight or rumen volume of the ruminant or pseudo-ruminant, based on these dosages provided for dairy cows and goats in the examples herein. Hence, for ruminants or pseudo-ruminants other than cows, the dose of butyric acid is preferably equivalent to a dose of at least 20 grams per animal per day, more preferably at least 50 grams per animal per day, more preferably at least 80 grams per animal per day, more preferably at least 85 grams per animal per day, more preferably at least 90 grams per animal per day, whereby the equivalent dose is determined based on the relative average weight of the animal or on the relative average rumen volume of the animal, as compared to that of a cow, in particular a dairy cow. The average rumen volume of an animal is a term well known in the art and documented for different ruminants and pseudo-ruminants. Hence, the skilled person is capable of calculating suitable doses of butyric acid for a particular ruminant or pseudo-ruminant based on the doses described herein for dairy cows.

The composition, and the daily amounts referred to herein, may be provided once a day or multiple times per day, depending on the feeding schedule. Preferably the composition is fed to the ruminant or pseudo-ruminant. The composition comprising butyrate, preferably wherein at least 25% of said butyrate is present in said composition in the form of magnesium butyrate and/or one or more esters of butyric acid, more preferably in the form of magnesium butyrate, can be added to the animal feed during feeding. This can for instance be done by mixing the composition with the animal feed or by mixing or pelleting together with other ingredients that are mixed with the animal feed. Alternatively, the composition comprising butyrate, preferably wherein at least 25% of said butyrate is present in said composition in the form of magnesium butyrate and/or one or more esters of butyric acid, more preferably in the form of magnesium butyrate, is provided separately from the animal feed.

As used herein, the term "butyrate" refers to a salt or ester of butyric acid. The composition for use in a method according to the invention preferably comprises butyrate in the form of one or more butyrate salts, one or more esters of butyric acid or a combination thereof. Preferably at least 25 % of said butyrate is present in said composition in the form of the magnesium salt, i.e. as magnesium butyrate, and/or one or more esters of butyric acid. Hence, preferably at least 25% of the daily amounts mentioned herein above of at least 5 grams, at least 10 grams, at least 15 grams, at least 20 grams, at least 50 grams, at least 80 grams, at least 85 grams or at least 90 grams of butyric acid per animal per day, in particular for cattle or goats, more particularly for cows or goats, are in the form of magnesium butyrate, and/or one or more esters of butyric acid. The composition may comprise other butyrate salts such as sodium butyrate, potassium butyrate and calcium butyrate. In a preferred embodiment, the amount of magnesium butyrate and/or one or more esters of butyric acid is an effective amount to reduce or avoid undesired effects, in particular metabolic problems, associated with calcium and/or sodium butyrate salts. In a further preferred embodiment at least 25% of the butyrate present in the composition is in the form of magnesium butyrate and/or one or more esters of butyric acid, preferably at least 40%, more preferably at least 50%, more preferably at least 60%, more preferably at least 80% of the butyrate present in the composition is in the form of magnesium butyrate and/or one or more esters of butyric acid, preferably of the daily amounts mentioned herein above are equivalent of at least 5 grams, at least 10 grams, at least 12 grams, at least 14 grams, at least 15 grams, at least 20 grams, at least 50 grams, at least 80 grams, at least 85 grams or at least 90 grams of butyric acid per animal per day. In a further preferred embodiment, essentially all butyrate present in the composition is in the form of magnesium butyrate and/or one or more esters of butyric acid.

In a further preferred embodiment at least 25 % of the butyrate present in the composition is in form of magnesium butyrate, preferably at least 40%, more preferably at least 50%, more preferably at least 60%, more preferably at least 80%, of the butyrate present in the composition is in the form of magnesium butyrate, preferably of the daily amounts mentioned herein above are equivalent of at least 5 grams, at least 10 grams, at least 12 grams, at least 14 grams, at least 15 grams, at least 20 grams, at least 50 grams, at least 80 grams, at least 85 grams or at least 90 grams of butyric acid per animal per day. In a further preferred embodiment, essentially all butyrate present in the composition is in the form of magnesium butyrate.

The term "ester of butyric acid" as used herein refers to any carboxylic ester where the carboxylic acid component is butyric acid. In a preferred embodiment, the ester of butyric acid is a butyrate glyceride, more preferably a butyrate glyceride selected from the group consisting of monobutyrin, dibutyrin, tributyrin or combinations thereof. More preferably, the butyrate glyceride is a tributyrin. Butyrate glycerides consist of a varied number of butyric acid molecules attached to a glycerol backbone. For example, monobutyrins, dibutyrins and tributyrins are composed of a glycerol backbone to which one, two or three butyric acids are bound via an ester linkage, respectively. The ester bonds can be cleaved off by lipases thereby enterically releasing butyric acid.

The butyric acid molecules are released from esters of butyric acid into the rumen by rumen microbial lipases. Without wishing to be bound to theory, it is believed that the release rate of butyric acid from butyrate glycerides is favorable in ruminants and pseudo-ruminants as compared to monogastric animals as microbial lipases in the rumen can hydrolyze all three ester bonds within a triglyceride. In contrast, pancreatic lipases in the small intestine of monogastric animals are unable to hydrolyze the n-2 position of a triglyceride.

The method according to the invention is used in a ruminant or pseudo-ruminant, in particular a pregnant ruminant or pseudo-ruminant. As used herein "ruminant" refers to any mammal of the suborder Ruminantia (order Artiodactyla), which includes but is not limited to the pronghorns, giraffes, okapis, deer, chevrotains, cattle, antelopes, sheep, and goats.

As used herein "pseudo-ruminants" refers to any mammal of the suborder Tylopoda (order Artiodactyla), which includes but is not limited to camelids such as camels, llamas, guanacos, alpacas and vicuñas, and of the suborder Whippomorpha (order Artiodactyla), in particular hippopotamidae, which includes hippopotamus *(Hippopotamus amphibius*) and pygmy hippopotamus (*Choeropsis liberiensis*)*.* Ruminants are characterized by a four-chambered stomach, whereas pseudo-ruminants are characterized by a three-chambered stomach. In one preferred embodiment the ruminant or pseudo-ruminant is a dairy ruminant or pseudo-ruminant. In a preferred embodiment the method according to the invention is used in a ruminant. In a preferred embodiment the ruminant is a dairy ruminant. In another preferred embodiment, the ruminant is cattle, more preferably the ruminant is a cow, such as a dairy cow or a beef cow. In another preferred embodiment, the ruminant is a goat, such as a dairy goat. In a particularly preferred embodiment the ruminant is a dairy cow or goat.

The composition comprising butyrate, preferably wherein at least 25% of said butyrate is present in said composition in the form of magnesium butyrate and/or one or more esters of butyric acid, more preferably in the form of magnesium butyrate and/or one or more esters of butyric acid, is provided to the ruminant or pseudo-ruminant, preferably ruminant, during at least part of the prepartum period. The prepartum period refers to the period before giving birth and may be any amount of time in days, weeks or months that the ruminant or pseudo-ruminant, preferably ruminant, is pregnant, i.e. the gestation period. Preferably, the composition is provided at least 1 week prepartum. In a preferred embodiment, the composition is provided daily for at least 1 week prepartum, more preferably the composition is provided daily between 1 and 7 weeks prepartum. In a further preferred embodiment, the composition is provided daily for at least 3 weeks prepartum. As used herein "x weeks prepartum" refers to the period of x weeks immediately preceding the expected date of parturition. As used herein, "daily" means that the composition is provided to the animal at least once a day, but may be provided multiple times a day. Optionally, the composition may be provided during the entire prepartum or gestation period. In a preferred embodiment, when the ruminant or pseudo-ruminant is a dairy ruminant or pseudo-ruminant, such as a dairy cow or goat, the composition may be provided daily during part of the dry period or during the entire dry period. The dry period of a dairy animal refers to a period immediately preceding parturition, wherein the milk production of a dairy animal is stopped. The exact duration of the dry period depends on the species and can be influenced. For dairy cows, the dry period is typically a period of approximately four to ten weeks immediately preceding expected parturition. The dry period provides an important resting period, where fresh udder tissue is formed in readiness for the lactation. In addition, cows begin to produce colostrum within the dry period, approximately 5 weeks prepartum.

In one embodiment, the composition comprising butyrate, preferably wherein at least 25% of said butyrate is present in said composition in the form of magnesium butyrate and/or one or more esters of butyric acid, as defined herein and used in accordance with the invention consists solely of said butyrate, either of a single form of butyrate or of a combination of different forms of butyrate. For instance in one embodiment, said composition consists of magnesium butyrate and/or one or more esters of butyric acid, and optionally one or more other butyrate salts such as calcium butyrate, sodium butyrate and/or potassium butyrate. In another embodiment, said composition consists of magnesium butyrate and/or other butyrate salts, such as calcium butyrate, sodium butyrate and/or potassium butyrate. In yet another embodiment, said composition consists of magnesium butyrate. In yet another embodiment, said composition consists of magnesium butyrate and/or one or more esters of butyric acid. In yet another embodiment, said composition consists of one or more esters of butyric acid, preferably monobutyrin, dibutyrin and/or tributyrin. In yet another embodiment, said composition consists of tributyrin.

However, the composition comprising butyrate, preferably wherein at least 25% of said butyrate is present in said composition in the form of magnesium butyrate and/or one or more esters of butyric acid, as defined herein and used in accordance with the invention may also comprise other components, including excipients. Excipients used in animal feed or feed additives are well known in the art. Examples include carriers, diluents and fillers.

In a preferred embodiment, the composition comprising butyrate, preferably wherein at least 25% of said butyrate is present in said composition in the form of magnesium butyrate and/or one or more esters of butyric acid, more preferably in the form of magnesium butyrate and/or one or more esters of butyric acid, is formulated for release of butyrate in the rumen of the ruminant or pseudo-ruminant, preferably ruminant.

The rumen is the first chamber in the gastrointestinal tract of ruminants or pseudo-ruminants. With ruminants and pseudo-ruminants, ingested material directly enters into the rumen where it becomes part of either the liquid or solid phase of the rumen content. Generally, rumen release means that the butyric acid is available for absorption by the ruminal epithelium. In order to achieve rumen release, butyric acid from ingested butyrate needs to be solubilised within the mean retention time in the rumen of the composition in order for it to be available for absorption by the ruminal epithelium. As is known to a skilled person, in the case of butyrate salts, rumen-release only relates to the solubilisation of the butyrate salt in rumen fluid. In the case of butyric acid esters, solubilisation of the butyric acid also requires enzymatic cleavage of the ester linkage by the action of microbial lipases, as described herein above. Retention time is a term well known in the art, and data for rumen retention times are documented for ruminant and pseudo-ruminants. For instance, the mean retention time of the rumen liquid phase in dairy cows has been reported to be 8.7 hours (Mambrini et al., 1997 Reproduction Nutrition Development 37(4):427;doi.org/10.1051/rnd:19970404). In other animal species these values differ, with mean retention time of the liquid phase generally increasing as animal size decreases (Weyreter et al., 1987, Journal of Animal Physiology and Animal Nutrition 58:89-100; doi.org/10.1111/j.1439-0396.1987.tb00151.x).

Release in the rumen can be assessed by different methods known in the art. For example, by *in vitro* incubation of the composition under rumen-like conditions (e.g. as described in Tassone et al., 2020 Animals 10:775; doi:10.3390/ani10050775, and in Example 4 herein) with measurement of the butyrate released into the liquid phase via HPLC or GC analysis of liquid phase samples. The ruminal butyrate concentrations can also be directly measured *in vivo* (e.g. as described in van Lingen et al., 2017 Frontiers in Microbiology, 8:425; doi: 10.3389/fmicb.2017.00425). Alternatively, the composition can be incubated in the rumen using a suspended bag (*in situ* method, e.g. as described in Nocek, 1988 Journal of Dairy Science, 71:2051; doi: 10.3168/jds.S0022-0302(88)79781-7), where the remaining bag contents is then analyzed in terms of weight loss, or analyzed to determine specifically the amount of butyrate lost.

As the rumen is the first stomach of the ruminant and pseudo-ruminant, no coating or encapsulation is necessary to achieve release of the butyrate from the composition in the rumen. However, coating or encapsulation of the butyrate in the form of the salt or ester may slow down its rumen release. Different types and procedures of coating or encapsulation lead to different release patterns. Coating or encapsulation is used in practice in order to improve smell and handling properties of butyrate products, as well as for controlling release kinetics and/or location. Hence, the composition used in the method of the invention may comprise a coating or other forms of protection to prevent immediate release of the butyrate, and to provide gradual release in the rumen. This is in particular relevant if the butyrate is provided at least in part in the form of butyrate salt or salts, i.e. magnesium butyrate, alone or in combination with one or more other butyrate salts. Coatings and encapsulation strategies to achieve gradual release in the rumen are well known in the art. For instance, gradual release of butyrate can for instance be achieved by using a formulation wherein the butyrate, preferably magnesium butyrate and optionally other salts of butyrate, are coated in fat, such as in a fat-based matrix, or in a degradable polymer coating. Thus, in one preferred embodiment, the butyrate is present in the composition in uncoated form. In another preferred embodiment, the butyrate present in the composition comprises a coating or encapsulation for gradual release in the rumen. In one preferred embodiment, said coating is a fat coating. In another preferred embodiment, said coating is a degradable polymer coating, in particular a rumen degradable polymer coating. Suitable examples thereof are carbohydrate coatings.

As detailed herein above, it is preferred that the composition is provided to the ruminant or pseudo-ruminant, preferably ruminant, more preferably cattle or goats, more preferably a dairy cow or goat, at a dose of at least 5 grams of butyric acid per day, more preferably at a dose of at least 10 grams of butyric acid per day, more preferably at a dose of at least 12 grams of butyric acid per day, more preferably at a dose of at least 14 grams of butyric acid per day, more preferably at a dose of at least 15 grams of butyric acid per day, more preferably at a dose of at least 20 grams of butyric acid per day, more preferably at a dose of at least 25 grams of butyric acid per day, more preferably at a dose of at least 50 grams of butyric acid per day, more preferably at a dose of at least 80 grams of butyric acid per day, more preferably at a dose of at least 85 grams of butyric acid per day, more preferably at least 90 grams of butyric acid per day, based on the amount of butyric acid (CH₃CH₂CH₂CO₂H) as such. For cows, in particular dairy cows, the preferable dose of butyric acid is at least 20 grams per animal per day, more preferably at least 50 grams per animal per day, more preferably at least 80 grams per animal per day, more preferably at least 85 grams per animal per day, more preferably at least 90 grams per animal per day. For goats, in particular dairy goats, the preferable dose of butyric acid is at least 5 grams per animal per day, more preferably at least 10 grams per animal per day, more preferably at least 12 grams per animal per day, more preferably at least 14 grams per animal per day, more preferably at least 15 grams per animal per day. For other species of ruminants or pseudo-ruminants, suitable doses can be calculated based on the relative average weight or rumen volume of the ruminant or pseudo-ruminant, based on these dosages provided for dairy cows and goats in the examples herein, as detailed herein above. Rumen release preferably means that essentially the entire dose of butyrate, more preferably the entire dose of butyrate, is released in the rumen. This dose is further preferably absorbed in the rumen. According to the method of the invention, at least 5 grams of butyric acid per day is released in the rumen of the ruminant or pseudo-ruminant, preferably ruminant, more preferably cattle or goats, more preferably a dairy cow or goat, whereby the amounts are based on the amount of butyric acid (CH₃CH₂CH₂CO₂H). More preferably at least 10 grams of butyric acid per day is released in the rumen, more preferably at least 12 grams of butyric acid per day, more preferably at least 14 grams of butyric acid per day, more preferably at least 15 grams of butyric acid per day, more preferably at least 20 grams of butyric acid per day, more preferably at least 50 grams of butyric acid per day, more preferably at least 80 grams of butyric acid per day, more preferably at least 85 grams of butyric acid per day, more preferably at least 90 grams of butyric acid per day, whereby the amounts are based on the amount of butyric acid (CH₃CH₂CH₂CO₂H). For cows, in particular dairy cows, preferably at least 20 grams of butyric acid per day is released in the rumen, more preferably at least 50 grams, more preferably at least 80 grams, more preferably at least 85 grams, more preferably at least 90 grams. For goats, in particular dairy goats, preferably at least 5 grams of butyric acid per day is released in the rumen, more preferably at least 10 grams, more preferably at least 12 grams, more preferably at least 14 grams, more preferably at least 15 grams. For other species of ruminants or pseudo-ruminants, the amounts of butyric acid released in the rumen per day can be calculated based on the relative average weight or rumen volume of the ruminant or pseudo-ruminant, based on these amount provided for dairy cows and goats, as detailed herein above.

In one embodiment, the composition comprising butyrate, preferably wherein at least 25% of said butyrate is present in said composition in the form of magnesium butyrate and/or one or more esters of butyric acid, more preferably in the form of magnesium butyrate and optionally comprising other butyrate salts such as calcium butyrate, sodium butyrate and/or potassium butyrate, is a matrix-coated in a fat-substance. This way, gradual release of the butyrate in the rumen can be achieved. The term "matrix-coated in a fat-substance" as used herein refers to a formulation that is coated in a matrix of one or more fat-based substances. For example, a matrix coated formulation can be obtained by mixing of the composition with the fat-based substance and extruding or pressing the mixture into a pelleted shape that can be mixed with the animal feed. In a preferred embodiment, the ratio of the butyrate, preferably butyrate salt, and one or more fat-based substances is 20-95% of wt% of the butyrate salt to 5-80 wt% of the fat-based substance. More preferably, at least 30% of the butyrate, preferably butyrate salt, is present. More preferably, the ratio of the butyrate, preferably butyrate salt, to the one or more fat-based substances is 30-85 wt% of the butyrate, preferably butyrate salt, to 15-70 wt% of the one or more fat-based substances, more preferably 50-80 wt% of the butyrate, preferably butyrate salt, to 20-50 wt% of the one or more fat-based substances. For instance, a formulation containing 70 wt% of the butyrate, preferably butyrate salt, can be used. Such ratio ensures that the composition comprising butyrate is sufficiently coated by the fat-based substance in order to achieve the desired properties, such as gradual release of the butyrate in the rumen, but also other desired properties such as increased resistance, chemical and thermal stability for delayed release of the active ingredients, increased homogeneity of the product, improved smell and/or improved handling properties of the composition. As used herein "wt%" means weight percent and refers to the percentage of the butyrate, preferably butyrate salt, and fat-based substance by weight based on the total combined weight of the butyrate, preferably butyrate salt, and the fat-based substance or substances.

Suitable fatty substances are well known in the art. The fatty substance may consist of a single fat or oil or a combination of two or more different fats or oils. Other organic compounds that are solid near ambient temperature may also be used, i.e. waxes. In a preferred embodiment, the fatty substance is selected from the group consisting of fatty acids, fatty alcohols, glyceride esters of fatty acids, alkyl esters of fatty acids, hydroxyl fatty acid analogues and combinations thereof, and preferably in a form that is solid at a temperature of up to 60°C, preferably at least up to 50°C, more preferably at least up to 40°C. More preferably the fatty substance is a vegetable, plant or animal fat or oil, more preferably a vegetable or plant oil including coconut oil, palm oil, soybean oil, rapeseed oil, sunflower oil, corn oil, safflower oil, sesame oil, linseed oil, grape seed oil and olive oil. Preferably, if the fatty substance is an oil or combination of oils, preferably a vegetable or plant oil, the oil is hydrogenated in order to obtain a solid consistency at the indicated temperatures. The term "hydrogenated" is well known in the art and refers to addition of hydrogen to the unsaturated bonds of the fatty acid chains. In this way, the unsaturated fat or oil is turned into saturated fat and its melting point is increased. In a further preferred embodiment, fatty substance comprises a vegetable or plant oil, preferably the fatty substance comprises palm oil, rapeseed oil, soybean oil, or a mixtures of two or more thereof, even more preferably the fatty substance comprises hydrogenated palm oil, hydrogenated rapeseed oil, hydrogenated soybean oil or a mixtures of two or more thereof. In a further preferred embodiment, the fatty substance is vegetable or plant oil, preferably is hydrogenated vegetable or plant oil, more preferably hydrogenated palm oil.

Mixing of the composition comprising butyrate and the fat-based substance(s) can be performed with any method known in the art for mixing powders, such as with an industrial mixer or blender. Such methods are well known to a person skilled in the art. After mixing, the mixture may be processed by any process by which ingredients are extruded, pressed, pushed, or protruded through orifices under pressure using e.g. a ram or screw to produce pellets or granules sufficiently coherent and mechanically resistant, fulfilling specific requirements of shape, size, texture and/or properties important for use in specific environments. Suitable methods to prepare compositions that are matrix-coated with fat-based substance(s) are described in EP 2727472.

In a preferred embodiment, the composition comprising butyrate as defined herein, preferably wherein at least 25% of said butyrate is present in said composition in the form of magnesium butyrate and/or one or more esters of butyric acid, more preferably in the form of magnesium butyrate and/or one or more esters of butyric acid, is comprised in an animal feed product or feed additive. The composition can for instance be mixed in an animal feed product or feed additive and sold as such. The composition can be mixed into animal feed product and/or feed additive at any ratio, depending on the feeding requirements.

A composition comprising butyrate used in the method according to the invention may be mixed with other ingredients or feed supplements that could benefit or affect physiological processes in an organism or provide benefit to the animal industry. Examples of such ingredients include but are not limited to vitamins, minerals, active ingredients and/or other components.

The invention will be explained in more detail in the following, non-limiting examples.

### Brief description of the drawings

Figure 1: Dutch trial design for evaluating the effects on colostrum upon feeding coated magnesium butyrate daily to dairy cows starting 3 weeks prior to calving.
Figure 2: A) Colostrum yield in cows supplemented with coated magnesium butyrate and controls during 3 weeks prior to calving. B) Milk yield for the first 31 days in milk (DIM) for cows supplemented with coated magnesium butyrate and controls during 3 weeks prior to calving.
Figure 3: Brix values in the colostrum from cows supplemented with coated magnesium butyrate and controls during 3 weeks prior to calving.
Figure 4: IgG concentration in the colostrum from cows supplemented with coated magnesium butyrate and controls during 3 weeks prior to calving.
Figure 5: Spanish trial design for evaluating the effects on colostrum upon feeding coated magnesium butyrate daily to dairy cows starting 3 weeks prior to calving.
Figure 6: Colostrum yield in cows supplemented with coated magnesium butyrate and controls during 3 weeks prior to calving.
Figure 7: A) Average milk yield in the first weeks after calving in cows supplemented with coated magnesium butyrate and controls during 3 weeks prior to calving. B) Average total milk yield in the first 112 days in milk (DIM) of cows supplemented with coated magnesium butyrate and controls during 3 weeks prior to calving.
Figure 8: Dutch trial design for evaluating the effects on colostrum upon feeding coated magnesium butyrate daily to dairy goats starting 3 weeks prior to kidding.
Figure 9: Percentage release of butyric acid from coated magnesium butyrate over time under rumen-like conditions. Data from each of the three individual replicate incubations are plotted (i.e. Rep 1, Rep 2 and Rep 3).

### Examples

### Example 1: In vitro simulation of rumen release

Coated magnesium butyrate (50g) (Rumen Ready^{®}, Palital Feed Additives, Velddriel, The Netherlands, containing magnesium butyrate that is matrix coated in hydrogenated palm fat) was incubated in 2L of water in triplicate under rumen-like conditions, i.e. at 39 °C with mixing. Incubation was performed using the Ankom Daisy^{II} incubator (Ankom Technology Corporation Fairport, NY, USA),) which is well documented in terms of its suitability for ruminant related research, in particular assessment of feed digestibility (Tassone et al. Animals 2020 April; 10, 775. doi:10.3390/ani10050775). Samples (50 ml) were removed at set time points from the replicate Daisy incubator jars. The samples were centrifuged (1 minute at 4,200 rpm at room temperature) and the supernatant stored at -20 _{°}C until volatile fatty acid (VFA) analysis using gas chromatography. After thawing, samples were diluted with an internal standard (isocapronic acid) in a phosphoric acid solution. Individual VFA were then separated by gas chromatography (column: Agilent HP-FFAP 30m * 0.32 mm * 0.25 pm) and were detected using a flame ionization detector. Identification and quantification of individual VFA was done using a chemical standard solution and correcting for the internal standard.

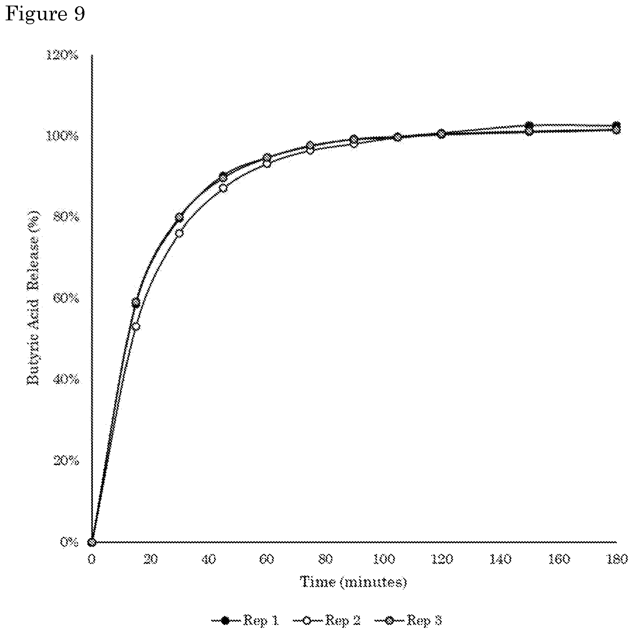

As expected, butyric acid was the only VFA detected in the samples. The butyric acid concentration data was then used to calculate the percentage release of butyric acid from the coated magnesium butyrate product over time (Figure 9). The gradual rlease of butyric acid from the coated magnesium butyrate was complete within 120 minutes.

### Examples 2-4: Different trials were performed to determine the effect of butyrate on colostrum and lactation performance.

### Example 2: Trial in the Netherlands with dairy cows

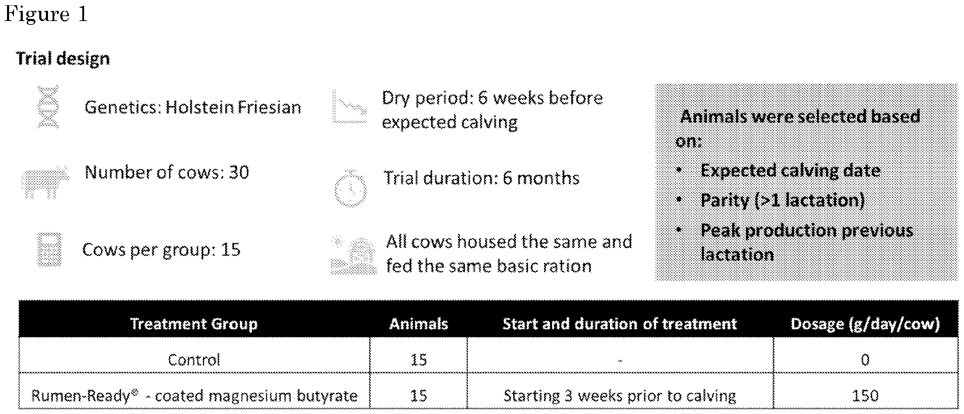

The trial consisted of 30 dry multiparous Holstein-Friesian dairy cows that were divided into two groups (15 animals per treatment) based on expected calving date, parity and peak production in previous lactation (Figure 1). The cows were dried off 6 weeks before the expected calving date. During the entire dry period, all animals received a basic ration and 2 kilograms per day of concentrate via the concentrate feeding station. From 3 weeks prior to the expected calving date until the actual calving date, the concentrate of the treatment group contained coated magnesium butyrate (Rumen Ready^{®}, Palital Feed Additives, Velddriel, The Netherlands) (Table 1). Rumen-Ready^{®} is a supplement containing magnesium butyrate that is matrix coated in hydrogenated palm fat. The concentrate of the control group contained no butyrate and was formulated on equal magnesium and fat levels (Table 1).

At the day of parturition, colostrum was collected within two hours after parturition and the total volume of colostrum measured (liters) and a digital refractometer used to determine the Brix value of the colostrum. The measured Brix value was converted to IgG concentration (grams per liter) using the formula of Bielmann et al. (Dairy Sci. 2010 Aug;93(8):3713-21. doi: 10.3168/jds.2009-2943). Total IgG was then calculated by multiplying the derived IgG values by the liters of colostrum. Daily milk yields were also recorded for the first 31 days of lactation. Results were then compared between the treatment and control groups.

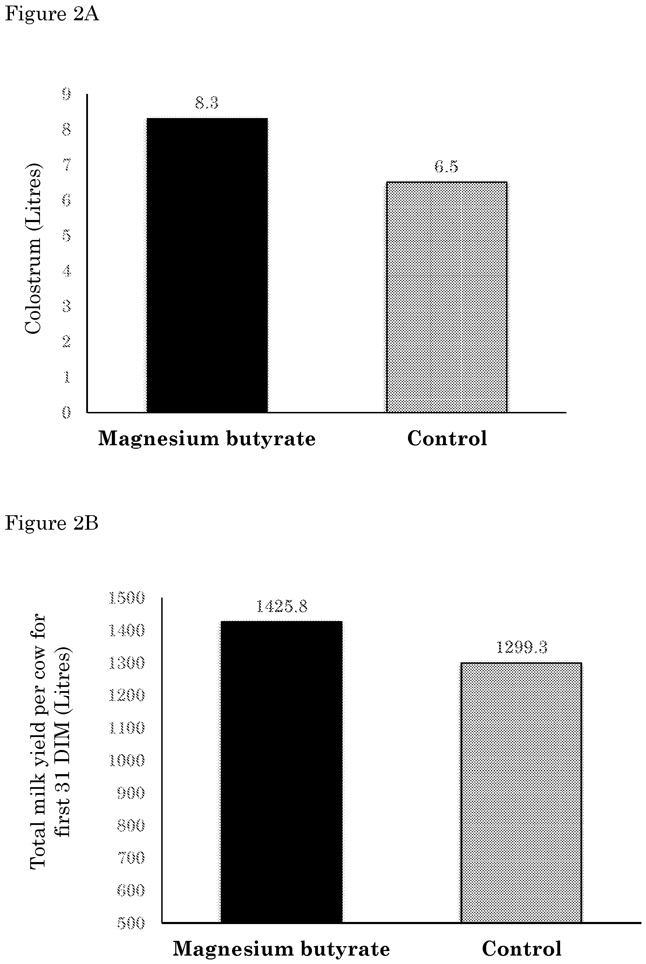

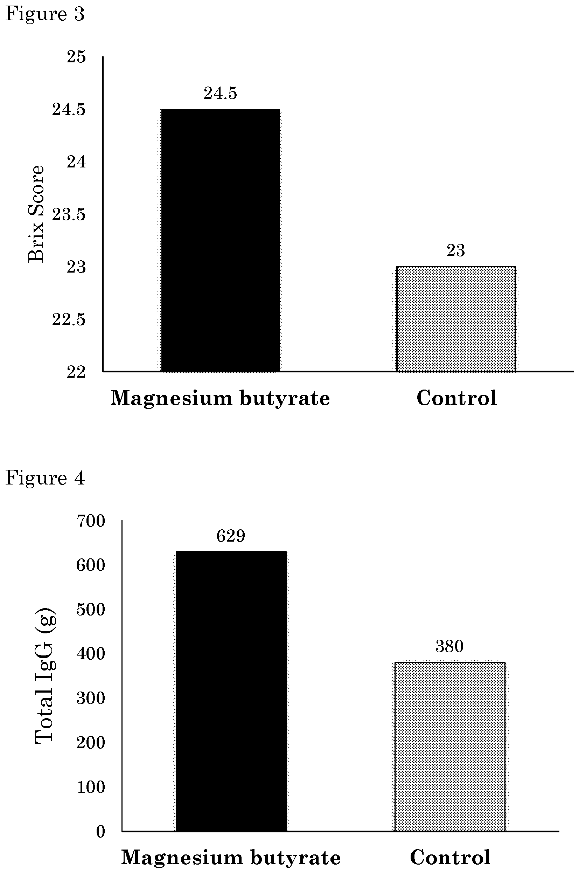

Cows that received coated magnesium butyrate yielded more colostrum and milk (Figure 2). In addition, an increase in the total amount of immunoglobulins was demonstrated in the colostrum (Figure 3, and Table 2). The concentration of IgG in colostrum was higher in cows that received coated magnesium butyrate (Table 2). Hence, both the concentration of IgG (grams per liter) and the total amount of IgG (Figure 4) was higher in colostrum from cows that received coated magnesium butyrate.

| **Table 1:** Concentrate composition (%) for the dry cows in the coated magnesium butyrate treatment and control groups during the 3 weeks before expected calving | | |
|---|---|---|
| **Concentrate Ingredient** | **Treatment** | **Control** |
| Barley | 5.03 | 5.03 |
| Wheat | - | 4.44 |
| Corn | 5.03 | 5.03 |
| Rapeseed Meal | 7.04 | 7.04 |
| Lupin | 6.54 | 6.54 |
| Sugar Cane Molasses | 4.02 | 4.02 |
| Citrocol | 3.01 | 3.01 |
| Beet Pulp | 53.41 | 53.41 |
| Palm Oil | - | 1.45 |
| Magnesium Oxide | - | 1.61 |
| Diamond V XPC Ultra | 0.35 | 0.35 |
| Flavouring | 0.02 | 0.02 |
| Vitamin A & D | 0.55 | 0.55 |
| Vitamin E Precursor | 0.46 | 0.46 |
| Vitamin E & Selenium | 1.00 | 1.00 |
| Sepifeed Tox 270 | 1.01 | 1.01 |
| Vital Dry Extra | 5.03 | 5.03 |
| Rumen Ready^{®} - coated magnesium butyrate | 7.50 | - |

| **Table 2:** Increased colostrum and IgG production in the coated magnesium butyrate treated group | | | | |
|---|---|---|---|---|
| **Group** | **Colostrum (kg)** | **Brix** | **IgG (grams/liter)** | **Total IgG (grams in colostrum)** |
| Control | 6.5 | 23.0 | 58.5 | 380 |
| Treatment | 8.3 | 24.5 | 75.8 | 629 |

### Example 3: Trial in Spain with dairy cows

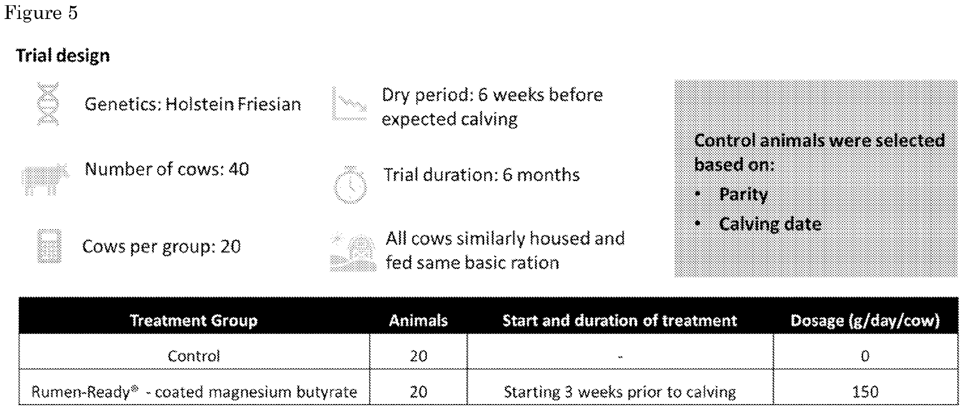

The trial consisted of 40 dairy cows divided into two groups (20 cows in the supplemented group and 20 cows in the control group) based on expected calving date and parity (Figure 5). Within each group, 20% of the cows were primiparous and 80% multiparous. Multiparous cows were dried off 6 weeks before the expected calving date. All animals were housed similarly during the 6 weeks prior to calving. All cows had ad libitum access to oat straw and were supplemented with 4 kg concentrate/day via a smart concentrate feeding station. The concentrate given to the treated animals resulted in 150g/cow/day of the coated magnesium butyrate (Rumen Ready^{®}) (Table 3). The concentrate for the control group was the same except that it contained no coated magnesium butyrate.

| **Table 3:** Concentrate composition fed to treated cows 3 weeks prior to calving | |
|---|---|
| **Ingredient** | **%** |
| Corn | 23.56 |
| Wheat Bran | 18.0 |
| Rapeseed Flour | 18.0 |
| Soybean Meal | 13.17 |
| Soft Wheat | 10.0 |
| Corn DDGS | 5.0 |
| Gluten Feed | 3.1 |
| Barley 2 types | 3.0 |
| Sugar Cane Molasses | 2.0 |
| Cecomix Dry Cows - Concentrates | 0.4 |
| Selsaf - Organic Selenium | 0.02 |
| Rumen-Ready^{®} - Coated Magnesium Butyrate | 3.75 |

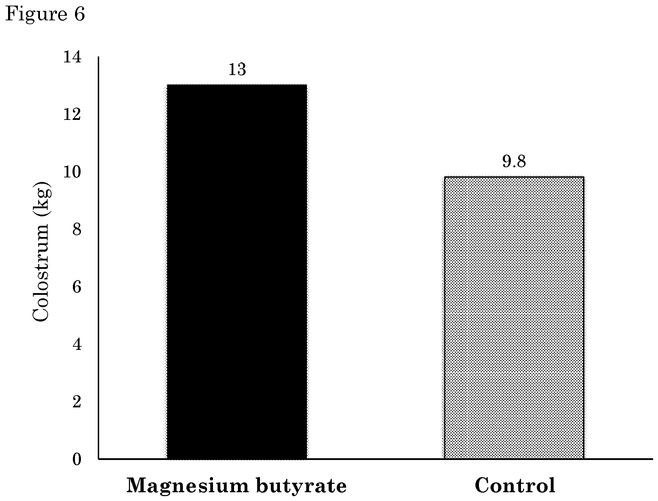

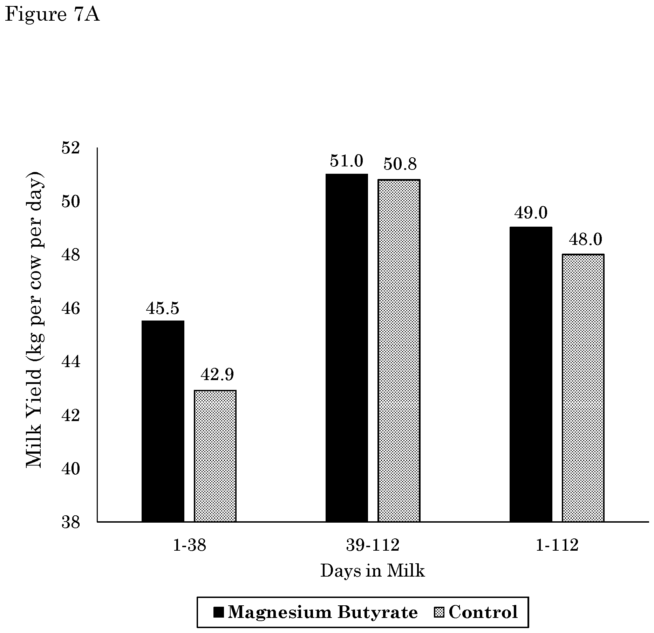

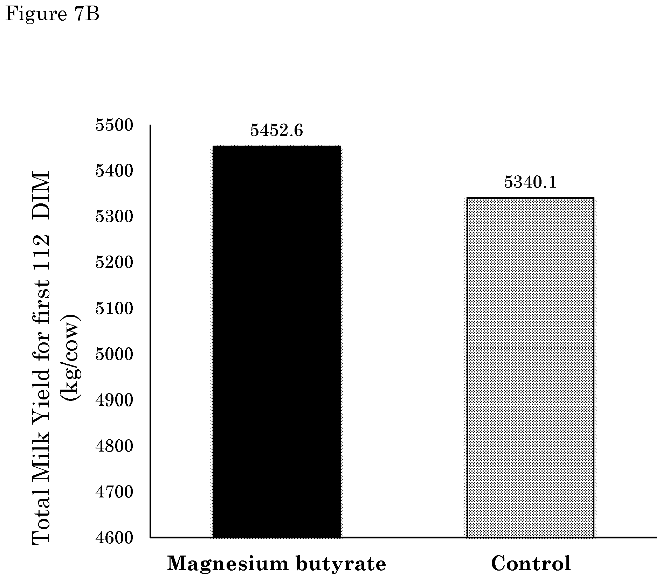

Cows that received coated magnesium butyrate produced more colostrum as compared to the control group (Figure 6). Further measurements during 16 weeks revealed a consistently higher milk production in the groups supplemented with coated magnesium butyrate (Figure 7, Table 4). Furthermore, milk production increase, relative to the control group, was highest in the first few weeks after parturition in the cows that received coated magnesium butyrate (Figure 7, Table 4).

| **Table 4:** Increased milk yield (kg milk/cow/day) in the coated magnesium butyrate treated group during 112 days in milk (DIM) ^{#} | | | |
|---|---|---|---|
| **Group** | **1-38 DIM** | **39-112 DIM** | **1-112 DIM** |
| Control | 42.9^{a} | 50.8^{a} | 48.0^{a} |
| Treatment | 45.5^{b} | 51.0^{b} | 49.0^{b} |
| Difference (Treatment-Control) | +2.6 | +0.2 | +1.0 |
| P value* | <0.001 | 0.02 | <0.001 |

| | | | |
|---|---|---|---|
| * Data were analyzed using pairwise T-Test. ^{#}Values with differing superscript letters within the same column are significantly different. | | | |

### Example 4: Trial in Netherlands with Goats

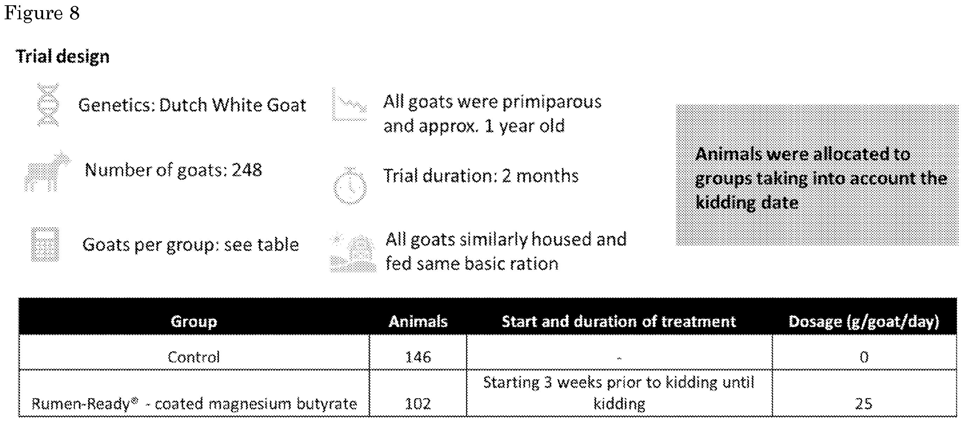

The trial used dairy goats divided into two groups based on expected kidding date (102 goats in the treatment group and 146 goats in the control group) (Figure 8). All goats were primiparous, approx. 1 year old and were housed similarly during the trial. All goats received forage (65% grass silage and 35% corn silage), a concentrate feed and a mineral supplement. The treatment group received coated magnesium butyrate (Rumen Ready^{®}, Palital Feed Additives, Velddriel, The Netherlands) via the forage for three weeks prior to the expected kidding date until kidding. The coated magnesium butyrate was fed at a dosage of 25g Rumen-Ready^{®}/goat/day.

At the day of parturition, colostrum was collected within 4 hours of kidding and assessed using pooled samples from a known number of goats (average of 16 for control group and 11 for treatment group). For both the control and treatment groups 9 pooled samples were collected. For each pooled sample, a refractometer was used to determine the Brix value of the pooled colostrum. The total volume of the pooled colostrum was measured (liters), and then divided by the number of animals from which the pooled sample was derived (i.e. average liters/animal). The measured Brix value was converted to IgG concentration (grams per liter) using the formula of Bielmann et al. (Dairy Sci. 2010 Aug;93(8):3713-21. doi: 10.3168/jds.2009-2943). Total IgG was then calculated by multiplying the derived IgG values by the average liters/animal of colostrum. Results were then compared between the treatment and control groups.

Goats in the treatment group produced more colostrum compared to the control group (Table 5). The quality of the colostrum in terms of Brix value was improved in the treatment group relative to the control. IgG concentration as well as total IgG was also increased in the treatment group compared to the control.

| **Table 5:** Increased colostrum yield, Brix value, calculated IgG and Total IgG in the treatment group compared to the control group | | | | |
|---|---|---|---|---|
| **Group** | **Colostrum Yield (average L/goat)** | **Brix** | **IgG (g/L)** | **Total IgG (9)** |
| Control | 1.12 | 21.7 | 43.4 | 49 |
| Treatment | 1.39 | 22.8 | 56.2 | 78 |
| % Difference (Treatment-Control) | +24% | - | +29% | +59% |

## Claims

1. A method for improving colostrum in a ruminant or pseudo-ruminant, wherein a ruminant refers to a mammal of the suborder Ruminantia and a pseudo-ruminant refers to a mammal of the suborder Tylopoda and of the suborder Whippomorpha,
wherein the improvement of colostrum comprises an increase in colostrum yield by at least 5% within the first 6 hours after parturition and/or an increase in immunoglobulin concentration in colostrum by at least 5% within the first 6 hours after parturition, the method comprising providing said ruminant or pseudo-ruminant with a composition comprising butyrate during at least part of the prepartum period, wherein the composition is formulated for release of butyrate in the rumen of said ruminant or pseudo-ruminant, whereby at least 5 grams of butyric acid per day is released in the rumen and wherein the at least 5% increase in colostrum yield and/or immunoglobulin concentration is as compared to non-butyrate supplemented ruminants or pseudo-ruminants.

2. Method according to claim 1, wherein at least 25% of said butyrate is present in said composition in the form of magnesium butyrate and/or one or more esters of butyric acid.

3. Method according to any one of the preceding claims, wherein essentially all butyrate present in said composition is in the form of magnesium butyrate and/or one or more esters of butyric acid.

4. Method according to any one of the preceding claims, wherein the ester of butyric acid is a butyrate glyceride, selected from the group consisting of monobutyrin, dibutyrin, tributyrin and combinations thereof.

5. Method according to any one of the preceding claims, wherein said ruminant is a cow and said composition is provided daily for at least 1 week prepartum.

6. Method according to claim 5 wherein said cow is a dairy cow and said composition is provided daily between 1 and 7 weeks prepartum.

7. Method according to any one of the preceding claims, wherein the colostrum yield and/or total immunoglobulin concentration are increased by at least 10%.

8. Method according to any one of the preceding claims, wherein the total IgG concentration is increased.

9. Method according to any one of the preceding claims wherein said composition is matrix-coated in a fat-based substance.

10. Method according to claim 9 wherein said composition comprises a mixture of butyrate and one or more fat-based substance in a ratio of 20-95 wt% of butyrate to 5-80 wt% of fat-based substance.

11. Method according to claim 10, wherein said fat-based substance is selected from the group consisting of fatty acids, fatty alcohols, glyceride esters of fatty acids, alkyl esters of fatty acids, hydroxyl fatty acid analogues or any organic compounds that are solid near ambient temperature and/or combinations thereof, preferably the fatty substance is a vegetable, plant or animal fat, such as vegetable or plant oil like coconut oil, palm oil, soybean oil, rapeseed oil, sunflower oil, corn oil, safflower oil, sesame oil, linseed oil, grape seed oil or olive oil, more preferably the vegetable or plant oil is hydrogenated vegetable or plant oil such as hydrogenated palm oil.

12. Method according to any one of the previous claims, wherein said composition is provided to the ruminant or pseudo-ruminant at a dose of at least 5 grams of butyric acid per day.

## Patentansprüche

1. Verfahren zum Verbessern des Kolostrums bei einem Wiederkäuer oder Pseudo-Wiederkäuer,
wobei ein Wiederkäuer auf ein Säugetier der Unterordnung Ruminantia referenziert und ein Pseudo-Wiederkäuer auf ein Säugetier der Unterordnung Tylopoda und der Unterordnung Whippomorpha referenziert,
wobei die Verbesserung des Kolostrums einen Anstieg in Kolostrumausbeute um mindestens 5 % innerhalb der ersten 6 Stunden nach Entbindung und/oder einen Anstieg der Immunglobulinkonzentration im Kolostrum um mindestens 5 % innerhalb der ersten 6 Stunden nach Entbindung umfasst, das Verfahren umfassend Versorgen des Wiederkäuers oder Pseudo-Wiederkäuers mit einer Zusammensetzung umfassend Butyrat während mindestens eines Teils der Präentbindungsperiode,
wobei die Zusammensetzung für die Freisetzung von Butyrat in dem Pansen des Wiederkäuers oder Pseudo-Wiederkäuers formuliert ist, wodurch mindestens 5 g Buttersäure pro Tag in dem Pansen freigesetzt werden, und wobei der mindestens 5%ige Anstieg der Kolostrumausbeute und/oder der Immunglobulinkonzentration im Vergleich zu nicht mit Butyrat supplementierten Wiederkäuern oder Pseudo-Wiederkäuern ist.

2. Verfahren nach Anspruch 1, wobei mindestens 25 % des Butyrats in der Zusammensetzung in der Form von Magnesiumbutyrat und/oder einem oder mehreren Estern von Buttersäure vorhanden sind.

3. Verfahren nach einem der vorhergehenden Ansprüche, wobei im wesentlichen das gesamte in der Zusammensetzung vorhandene Butyrat in der Form von Magnesiumbutyrat und/oder einem oder mehreren Estern der Buttersäure ist.

4. Verfahren nach einem der vorhergehenden Ansprüche, wobei der Ester der Buttersäure ein Butyratglycerid ist, ausgewählt aus der Gruppe bestehend aus Monobutyrin, Dibutyrin, Tributyrin und Kombinationen davon.

5. Verfahren nach einem der vorhergehenden Ansprüche, wobei der Wiederkäuer eine Kuh ist und die Zusammensetzung täglich für mindestens 1 Woche Präentbindung verabreicht wird.

6. Verfahren nach Anspruch 5, wobei die Kuh eine Milchkuh ist und die Zusammensetzung täglich zwischen 1 und 7 Wochen Präentbindung verabreicht wird.

7. Verfahren nach einem der vorhergehenden Ansprüche, wobei die Kolostrumausbeute und/oder die Immunglobulin-Gesamtkonzentration um mindestens 10 % erhöht sind.

8. Verfahren nach einem der vorhergehenden Ansprüche, wobei die IgG-Gesamtkonzentration erhöht ist.

9. Verfahren nach einem der vorhergehenden Ansprüche, wobei die Zusammensetzung Matrix-beschichtet in einer Fett-basierten Substanz ist.

10. Verfahren nach Anspruch 9, wobei die Zusammensetzung ein Gemisch aus Butyrat und einem oder mehreren Fett-basierten Substanzen in einem Verhältnis von 20 - 95 Gew.-% von Butyrat zu 5 - 80 Gew.-% von Fett-basierter Substanz umfasst.

11. Verfahren nach Anspruch 10, wobei die Fett-basierte Substanz ausgewählt ist aus der Gruppe bestehend aus Fettsäuren, Fettalkoholen, Glyceridestern von Fettsäuren, Alkylestern von Fettsäuren, Hydroxyfettsäureanaloga oder beliebiger organischen Verbindungen, die bei Umgebungstemperatur fest sind, und/oder Kombinationen davon, vorzugsweise ist die fettige Substanz ein Pflanzenfett, pflanzliches oder tierisches Fett, so wie pflanzliches Öl oder Pflanzenöl wie Kokosnussöl, Palmöl, Sojaöl, Rapsöl, Sonnenblumenöl, Maiskeimöl, Distelöl, Sesamöl, Leinöl, Traubenkernöl oder Olivenöl, bevorzugter ist das pflanzliche Öl oder Pflanzenöl ein hydriertes pflanzliches Öl oder Pflanzenöl, so wie hydriertes Palmöl.

12. Verfahren nach einem der vorhergehenden Ansprüche, wobei die Zusammensetzung dem Wiederkäuer oder Pseudo-Wiederkäuer in einer Dosis von mindestens 5 g Buttersäure pro Tag verabreicht wird.

## Revendications

1. Procédé pour améliorer le colostrum chez un ruminant ou un pseudo-ruminant, dans lequel un ruminant se réfère à un mammifère du sous-ordre Ruminantia et un pseudo-ruminant se réfère à un mammifère du sous-ordre Tylopoda et du sous-ordre Whippomorpha,
dans lequel l'amélioration du colostrum comprend une augmentation du rendement en colostrum d'au moins 5 % dans les 6 premières heures suivant la parturition et/ou une augmentation de la concentration d'immunoglobuline dans le colostrum d'au moins 5 % dans les 6 premières heures suivant la parturition, le procédé comprenant la fourniture audit ruminant ou pseudo-ruminant d'une composition comprenant un butyrate durant au moins une partie de la période pré-partum, dans lequel la composition est formulée pour libérer du butyrate dans le rumen dudit ruminant ou pseudo-ruminant, moyennant quoi au moins 5 grammes d'acide butyrique par jour sont libérés dans le rumen, et dans lequel l'augmentation d'au moins 5 % du rendement en colostrum et/ou de la concentration d'immunoglobuline est telle que comparée à des ruminants ou pseudo-ruminants non complémentés en butyrate.

2. Procédé selon la revendication 1, dans lequel au moins 25 % dudit butyrate sont présents dans ladite composition sous la forme de butyrate de magnésium et/ou d'un ou plusieurs esters d'acide butyrique.

3. Procédé selon l'une quelconque des revendications précédentes, dans lequel pratiquement tout le butyrate présent dans ladite composition est sous la forme de butyrate de magnésium et/ou d'un ou plusieurs esters d'acide butyrique.

4. Procédé selon l'une quelconque des revendications précédentes, dans lequel l'ester d'acide butyrique est un glycéride de butyrate choisi dans le groupe constitué par la monobutyrine, la dibutyrine, la tributyrine et leurs combinaisons.

5. Procédé selon l'une quelconque des revendications précédentes, dans lequel ledit ruminant est une vache et ladite composition est fournie chaque jour pendant au moins 1 semaine pré-partum.

6. Procédé selon la revendication 5, dans lequel ladite vache est une vache laitière et ladite composition est fournie chaque jour entre 1 et 7 semaines pré-partum.

7. Procédé selon l'une quelconque des revendications précédentes, dans lequel le rendement en colostrum et/ou la concentration d'immunoglobuline totale sont augmentés d'au moins 10 %.

8. Procédé selon l'une quelconque des revendications précédentes, dans lequel la concentration d'IgG totale est augmentée.

9. Procédé selon l'une quelconque des revendications précédentes, dans lequel ladite composition est enrobée d'une matrice dans une substance à base de graisse.

10. Procédé selon la revendication 9, dans lequel ladite composition comprend un mélange de butyrate et d'une ou plusieurs substances à base de graisse en un rapport de 20 à 95 % en poids de butyrate pour 5 à 80 % en poids de substance à base de graisse.

11. Procédé selon la revendication 10, dans lequel ladite substance à base de graisse est choisie dans le groupe constitué par les acides gras, les alcools gras, les esters glycéridiques d'acides gras, les esters alkyliques d'acides gras, les analogues d'hydroxyacides gras ou de quelconques composés organiques qui sont solides aux alentours de la température ambiante et/ou leurs combinaisons, de préférence la substance grasse est une graisse végétale, animale ou de plante, telle qu'une huile végétale ou de plante comme l'huile de coco, l'huile de palme, l'huile de soja, l'huile de colza, l'huile de tournesol, l'huile de maïs, l'huile de carthame, l'huile de sésame, l'huile de lin, l'huile de pépins de raisin ou l'huile d'olive, mieux encore l'huile végétale ou de plante est une huile végétale ou de plante hydrogénée telle que l'huile de palme hydrogénée.

12. Procédé selon l'une quelconque des revendications précédentes, dans lequel ladite composition est fournie au ruminant ou pseudo-ruminant à une dose d'au moins 5 grammes d'acide butyrique par jour.
